# FASCICULE DE BREVET EUROPEEN

(11) **EP 0 320 390 B1**
(45) Date de publication et mention de la délivrance du brevet: **25.08.1993**
(21) Numéro de dépôt: 88403123.8
(22) Date de dépôt: 08.12.1988
(51) Int. Cl.: H02J 13/00

(54) **Système de télécommande domotique**
Fernsteuereinrichtung für Haushaltsgeräte
Remote control system for domestic appliances

(30) Priorité: 08.12.1987 FR 8717094
(43) Date de publication de la demande: 14.06.1989
(73) Titulaire: STORES MORARI SA, F-94190 VILLENEUVE SAINT-GEORGES (FR)
(72) Inventeur: Frugier, Pierre, F-94700 Maisons-Alfort (FR)
(74) Mandataire: Roman, Michel

(56) Documents cités:
- EP-A- 0 034 467
- FR-A- 2 392 524
- FR-A- 2 448 802
- FR-A- 2 510 777
- FR-A- 2 541 052
- GB-A- 2 050 662
- GB-A- 2 062 376
- US-A- 4 380 698

## Description

La présente invention a pour objet un système de télécommande domotique ou système destiné à être utilisé à l'intérieur d'un immeuble ou d'une habitation, en vue d'effectuer, à partir d'un point de l'immeuble ou de l'habitation, certaines commandes telles que par exemple la mise en marche d'un appareil electro-ménager, de moteurs, ou la commande de stores en fonction de conditions climatiques extérieures.

On connaît des systèmes de commande d'appareils alimentés par le réseau tels que les appareils d'éclairage public ou certaines horloges dites synchrones, des normes précises régissant la fréquence du courant distribué. Mais, ces systèmes de transmission à longue distance, utilisant dans la plupart des cas le passage à zéro de la tension, sont réservés aux services publics.

On connaît également déjà différents systèmes de programmation ou de télécommandes destinés à des usages domotiques. Il s'agit, d'une manière générale, d'agir pendant un temps donné sur un relais éloigné du point au voisinage duquel est effectuée la commande. Dans ce cas, la transmission est purement locale, de sorte que le problème d'affaiblissement des signaux ne se pose pratiquement pas.

De nombreux dispositifs utilisent, pour effectuer une telle télécommande, les caractéristiques physiques du rayonnement infrarouge.

Il est également connu d'utiliser le réseau de distribution de l'énergie électrique par exemple interne à un immeuble, pour effectuer une telle télécommande par le procédé dit "à courants porteurs" consistant, pour transmettre uhe information, à moduler un signal porteur, de fréquence relativement élevée par les informations à transmettre, puis à démoduler le signal au point d'utilisation pour en extraire les informations utiles.

Un système de transmission de données sur une ligne d'énergie électrique branchée à une source d'énergie électrique, selon un code en série, bit par bit, est connu par FR-A-2 469 065 (MATSUSHITA). Dans ce système, les données codées sont transmises d'un émetteur vers une pluralité de récepteurs, en synchronisme avec les cycles du courant alternatif d'une source d'énergie électrique. A cet effet, les émetteurs comprennent des moyens de génération d'un signal de synchronisation, en synchronisme avec les cycles du courant alternatif de puissance, ce courant ayant en France une fréquence de 50 Hertz, et une tension de 220 Volts.

Dans le brevet précité, les informations émises comprennent une information d'identification du récepteur, destinée à réaliser un adressage du récepteur concerné par la commande et une information de commande proprement dite qui représente une action à effectuer ou à commander par le récepteur lui-même. Dans ce système, on génère une porteuse haute fréquence qui représente les données émises, et chaque récepteur comprend des moyens de génération d'un signal de synchronisation réagissant au cycle du courant alternatif et engendrant un signal de synchronisation avec le courant secteur. Les données sont émises sur plusieurs cycles pour constituer une trame de données comprenant plusieurs bits arrangés selon un code en série.

La présente invention a pour objet un système de transmission de données utilisant le support matériel constitué par le réseau domestique de distribution d'énergie électrique, derrière un compteur, comme un bus de communication, indépendamment de la synchronisation du courant secteur.

GB-A-2050662 décrit également un dispositif de commande de l'alimentation d'appareils électriques permettant de superposer un signal de commande sur le circuit de distribution de courant électrique et d'adresser les différents appareils concernés. L'étage de commande comprend des moyens de temporisation et une mémoire.

EP-A-34467 décrit un récepteur de signaux comprenant un étage corrélateur destiné à assurer la coïncidence des signaux binaires d'information avec les signaux de synchronisation.

FR-A-2 570 777 décrit une installation de commande de plusieurs récepteurs électriques, chaque récepteur comprenant une unité arithmétique et logique qui établit une hiérarchie dans les ordres reçus et les interprète en fonction de l'état actuel des appareils commandés. Mais cet ensemble à relais nécessite un cablage considérable.

Aucun de ces documents ne prévoit l'établissement d'une liaison bidirectionnelle entre l'émetteur et les récepteurs.

Dans ce système un message binaire codé, modulé par une haute fréquence, est émis sur la ligne porteuse par un émetteur. Chaque récepteur s'accorde sur la fréquence porteuse en éliminant les signaux parasites hors d'une bande tolérée, et analyse le message émis par reconnaissance de son code individuel et/ou de groupe. La transmission ainsi assurée est indépendante de la fréquence du réseau, la fréquence porteuse du message étant située dans une bande normalisée.

Selon la présente invention, le système de transmission de signaux de commande sur une ligne de distribution d'énergie électrique, à l'intérieur d'un immeuble, comprenant au moins un émetteur et au moins un récepteur, l'émetteur et le récepteur étant couplés au réseau de distribution, l'émetteur générant une porteuse haute fréquence modulée par les informations, le récepteur étant muni de moyens aptes à démoduler la porteuse haute fréquence, les informations étant transmises sous forme binaire en série, l'émetteur incluant un microcontrôleur est caractérisé en ce que chacun des ensembles émetteur et récepteur inclût un microcircuit et un microcontrôleur structurellement identiques, mais chargés avec des programmes spécialisés, pour utiliser le réseau de distribution comme un bus bidirectionnel sur lequel le système réalise un dialogue entre l'émetteur et le ou les récepteurs ( sécurité de dialogue, redondance, question, réponse, validation et retour d'informations) permettant le contrôle de l'ordre recu par un ou des récepteurs et de l'état du ou des récepteurs..

Ainsi, il est possible d'établir sur la ligne de distribution un véritable dialogue en language binaire, entre l'émetteur et le récepteur, en faisant abstraction de la fréquence du courant du secteur et de la porteuse, les signaux générés par l'émetteur étant démodulés par le microcircuit avant leur transmission au microcontrôleur.

Le fonctionnement asynchrone par rapport au secteur de la transmission des informations s'est révélé particulièrement robuste vis-à-vis des parasites. Un émetteur et un récepteur comprennent ainsi les mêmes composants connectés de la même manière, seuls les programmes de l'émetteur et du récepteur étant différents.

Avantageusement, le générateur inclus dans le microcircuit est un générateur de type FSK (Frequency Shift Key), réalisant une modulation par saut de fréquence à partir d'une fréquence centrale. Ainsi la valeur Zéro peut être représentée par la porteuse F + Delta F, la valeur 1 étant représentée par un signal à la fréquence F - Delta F, F désignant la fréquence centrale de la porteuse.

La transmission d'un courant porteur modulé sur des lignes d'énergie présente des problèmes particuliers résultant de la tension de bruit non gaussienne sur le milieu, et est généralement altérée par des pics de bruit apparaissant à des intervalles égaux à l'inverse de la fréquence de ligne, c'est-à-dire par des pics de bruit qui apparaissent à des intervalles de 1/50ème de seconde, ces pics donnant naissance à des spectres de bruit comportant des harmoniques de la fréquence de ligne en plus du bruit "blanc" gaussien. Ces harmoniques diminuent le rapport signal/bruit, conduisent fréquemment à des taux d'erreurs trop élevés, et ainsi, il est souvent impossible de résoudre ce problème.

De plus, les perturbations d'origines "parasitaires", nombreuses sur le secteur, sont souvent aléatoires dans l'espace, et dans le temps, font de ce canal un milieu très agressif vis-à-vis des transmissions télématiques.

Un objet de la présente invention est de proposer un signal codé qui soit particulièrement bien protégé, vis-à-vis des parasites. En effet, il s'est avéré que le réseau domestique constitue une sorte d'antenne collectant les signaux radioélectriques vagabonds auxquels se superposent les parasites collectés par les lignes haute-tension.

Par suite, dans les dispositifs à courant porteur connus, se produisent relativement fréquemment des démarrages accidentels des appareils, ce qui peut avoir des conséquences dommageables. La présente invention permet de pallier cet inconvénient.

En effet, par son principe de fonctionnement, le microcircuit utilisé permet de restreindre la bande de fréquence utile à 5% autour de la fréquence porteuse et d'atténuer ainsi au maximum les fréquences parasites précitées. La sensibilité pour les fréquences utiles autorise donc des transmissions à moyenne distance.

Sa fonction est de verrouiller la fréquence utile et de rejeter les fréquences parasites. Il sera dénommé ci-après "boucle à verrouillage de phase" (PLL), et son rôle est d'accorder l'émission et la réception suivant le mode de transmission dit synchrone, cette PLL formant un circuit résonnant pour la fréquence F de la porteuse.

Selon une caractéristique de l'invention, le signal émis par l'émetteur au travers de la PLL et reçu par le récepteur est un signal binaire constitué de cinq mots de 8 bits émis en série. Le premier mot constitue le signal de réveil (start up) qui permet d'activer la boucle PLL verrouillée en phase. Le mot suivant constitue le mot de passe validant la suite de l'acquisition qui évite la prise en compte de signaux indésirables par les récepteurs. Ce mot ajoute une sécurité supplémentaire du filtrage des parasites.

Le troisième mot permet d'identifier un ensemble émetteur-récepteur pouvant dialoguer, et réalise un filtrage numérique des informations, et individualise ainsi chacune des familles.

Le quatrième mot est constitué de mots clés et par l'adresse individuelle du récepteur de l'appareil à commander. Le cinquième mot contient les informations de commande, la vérification de parité des bits transmis et des mots d'état.

Le protocole de dialogue prévoit un échange entre la télécommande (émetteur d'ordre) et le récepteur (exécutant de l'ordre) sélectionné par son adresse. Le récepteur qui a reconnu son code individuel, envoie en écho les 40 bits reçus.

Ce protocole est donc basé sur la séquence suivante :
1. Envoi d'un ordre codé par la télécommande suivant la procédure décrite ci-dessus ;
2. Renvoi d'un message codé (par le récepteur ayant reconnu son code) ;
3. Vérification et validation éventuelle (par la télécommande de l'ordre ainsi renvoyé) ;
4. Exécution de l'ordre par l'appareil sous contrôle du récepteur (dans le cas d'une validation de l'ordre par la télécommande).

En cas d'erreur de transmission, l'émission est répétée trois fois.

La redondance de ce dialogue assure une grande sécurité et, dans le cas d'une mauvaise transmission, mauvaise réception, plusieurs récepteurs ayant le même code, mauvais retour sur la ligne, et ce pendant 3 fois, l'émetteur envoie un ordre de désactivation et l'ordre est annulé.

Toute anomalie de transmission est systématiquement signalée sur la face avant du clavier de la télécommande par l'allumage d'une led rouge "défaut", et ce pendant un certain temps.

Lorsque le protocole d'échange s'établit correctement, ce qui se traduit en pratique par l'allumage d'une led verte "actif" pendant un certain temps, la commande est exécutée en fonction de l'ordre transmis, et le récepteur se remet à l'écoute de la ligne, prêt à recevoir un autre ordre le concernant.

De préférence, le microcircuit se trouvant, tant dans le ou les récepteurs que dans le ou les émetteurs, est un microcircuit du type de celui désigné par la référence LM 1893, fabriqué par la société japonaise NATIONAL SEMICONDUCTEUR. Ce circuit utilise la modulation par déplacement de fréquence, type de modulation parfaitement adaptée à la transmission de données numériques sur le secteur. La fréquence centrale F est fixée par un condensateur connecté entre les branches 1 et 2 disposées entre la broche 18 et la masse.

Les bits 0 et 1 sont, après modulation, représentés par des fréquences différentes et, dans le cas où la fréquence centrale est égale à 122,5 Khz, un bit 1 sera représenté par une fréquence de 120 Khz, alors qu'un bit 0 sera représenté par une fréquence de 125 Khz.

Ce circuit est parfaitement réversible car il peut fonctionner aussi bien en émission qu'en réception, suivant l'état de la broche de sélection 5.

En émission, la broche 5 est au niveau haut, le microcircuit capte les informations venant du microcontrôleur par la broche 17, et les renvoie sur le réseau par la broche 10.

En réception, la broche 5 est au niveau bas, le microcircuit reçoit les informations en provenance du réseau sur la broche 10, et les envoie au microcontrôleur par sa broche 12 pour traitement.

Le système de codage peut être défini par exemple par une structure matérielle (microinterrupteurs) ou logicielle, tant dans les récepteurs que dans les télécommandes. Ainsi, suivant son organisation de codage, une télécommande peut piloter un ou plusieurs récepteurs.

Une télécommande générale pourra piloter l'ensemble des récepteurs de l'habitation, et une télécommande particulière un seul sous-groupe particulier de 8 récepteurs au maximum.

L'agencement des installations dépend donc uniquement de la répartition des codes dans l'espace. Cette configuration permet donc un nombre très grand de possibilités sans qu'il y ait d'interférence de pilotage d'un groupe à l'autre.

Toutes les commandes individuelles, de groupe, de sous-groupe, en montée, descente ou stop, seront effectuées de la manière décrite précédemment.

Pour une raison de rapidité dans l'exécution de l'ordre, seule la formulation de la commande d'arrêt d'urgence s'effectuera sans écho (de la part du récepteur).

A la différence de la commande STOP, qui est individuelle, pour un sous-groupe ou un groupe de récepteurs, la commande d'arrêt d'urgence concerne l'ensemble des boîtiers de réception composant une même famille et son exécution est immédiate.

Ce qui signifie qu'en cas d'incident, il est possible de procéder à un arrêt d'urgence qui immobilise instantanément tous les stores, si un ensemble de stores est commandé, ou plus généralement, qui stoppe tous les appareils électriques commandés reliés au réseau. Cet arrêt d'urgence est effectué par pression sur une touche particulière prévue sur le clavier de commande 5.

Du côté récepteur, le microcontrôleur détecte ce signal et agit directement sur l'interface de sortie pilotant le dispositif à commander.

Sur le clavier de télécommande, une autre touche particulière permet d'obtenir, dans le cas où des stores sont télécommandés simultanément à partir d'une position initiale identique, l'arrêt de tous les stores à un même niveau intermédiaire, ceci dans un souci d'esthétique.

En effet, tous les moteurs sont équipés de butées de fin de course correspondant à la position haute et à la position basse d'un store.

Toute anomalie de fonctionnement (moteur en panne, gêne dans l'un quelconque des mouvements...) pourra être codée de la manière précitée.

La configuration représentée élimine toute action des parasites. Il s'est avéré qu'une telle transmission était parfaitement fiable en ce qui concerne le filtrage des parasites.

Afin de réaliser un filtrage analogique et de ne pas véhiculer sur le secteur des signaux parasites, un filtre passe-bas pourra être disposé à l'entrée du circuit de distribution d'énergie afin que le signal haute fréquence généré reste dans l'habitation.

D'autres caractéristiques et avantages de l'invention apparaîtront au cours de la description qui va suivre d'un mode particulier de réalisation, donné uniquement à titre d'exemple non limitatif, en regard des dessins qui représentent :
- la figure 1, un schéma théorique d'un système domotique selon l'invention ;
- la figure 2, un exemple de montage ;
- la figure 3, un schéma de principe du branchement entre un émetteur et un récepteur ;
- la figure 4, l'organigramme du programme d'un microcontrôleur émetteur ;
- la figure 5, un organigramme du programme du microcontrôleur récepteur ;
- la figure 6, un schéma du circuit de chien de garde.

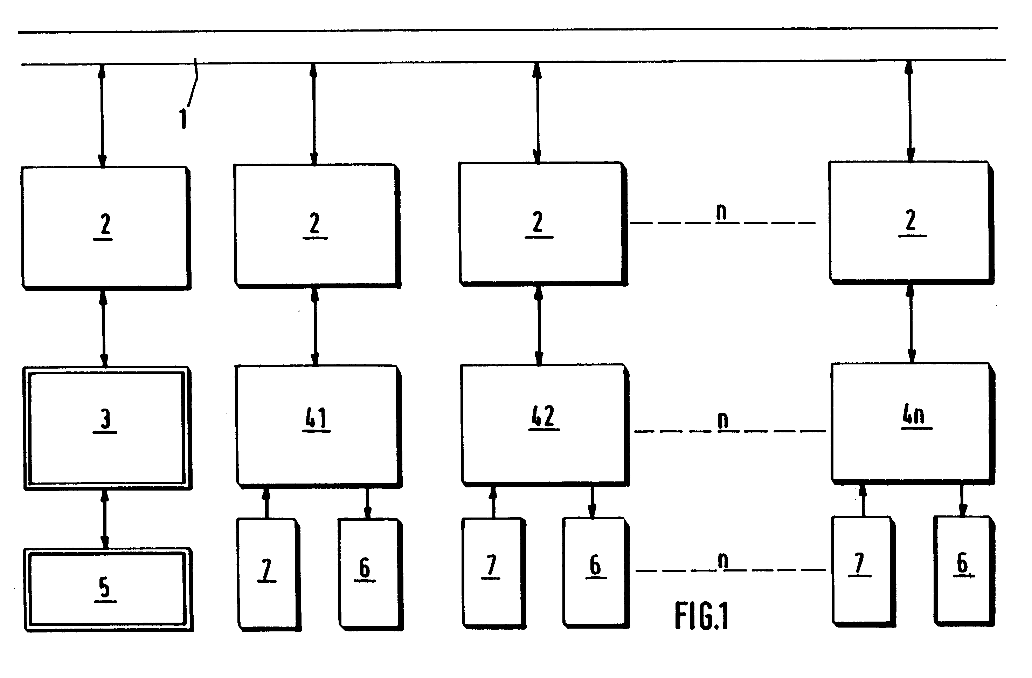

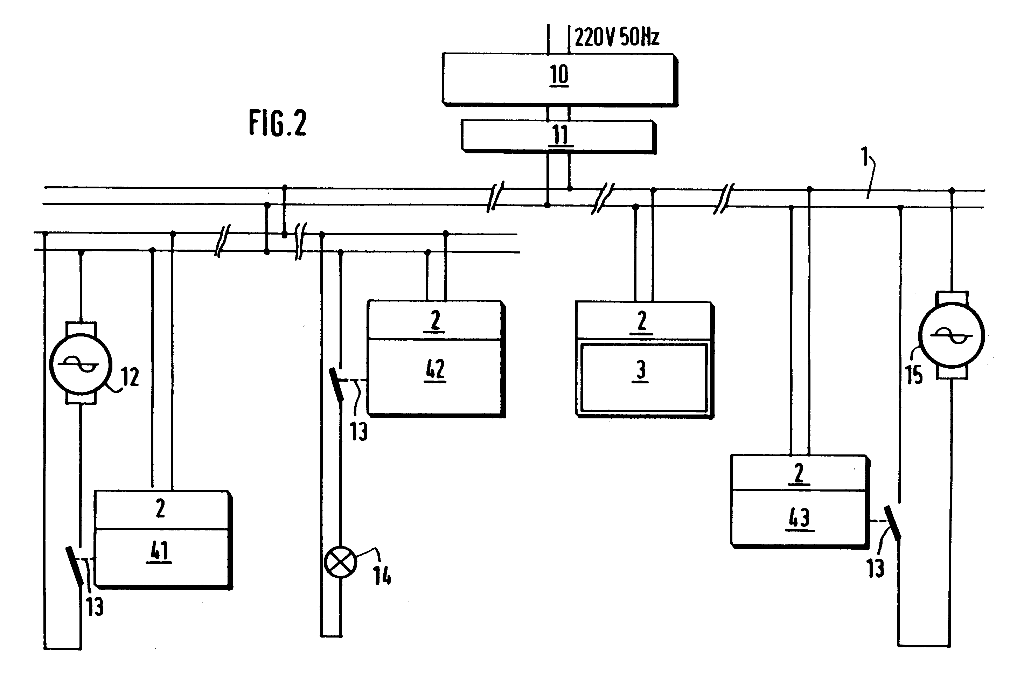

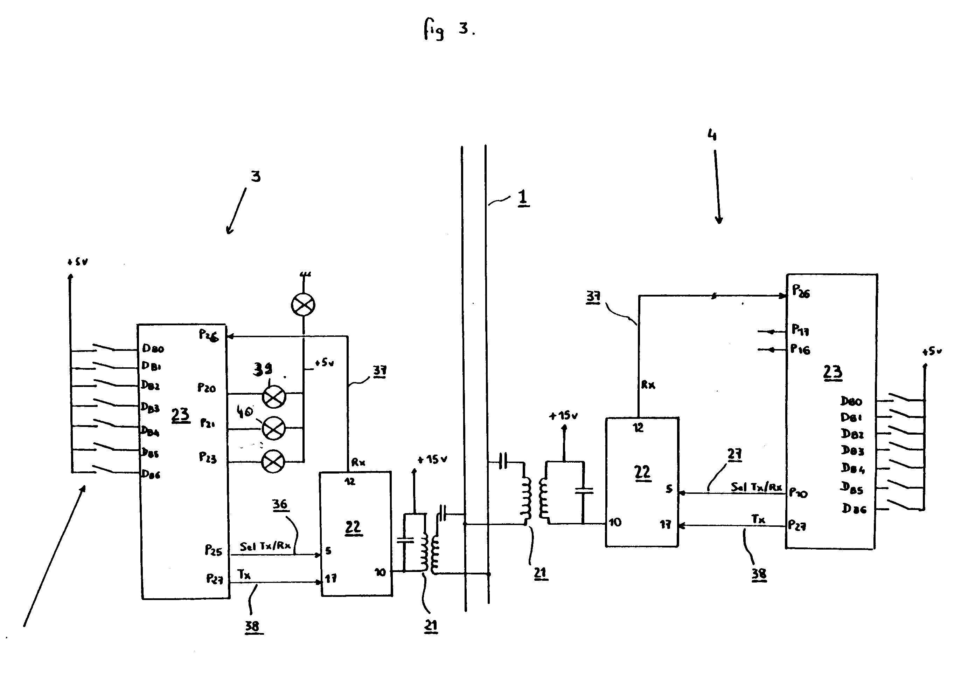

Comme représenté sur la figure 1, un ensemble émetteur et de récepteurs et, dans ce cas particulier, un émetteur et une pluralité de récepteurs, sont connectés à la ligne de distribution, chacun par l'intermédiaire d'un interface 2, cet interface étant relié soit à un émetteur 3, soit à un récepteur 4. L'étage émetteur 3 est connecté à un pupitre ou un tableau de commande 5, qui sera constitué d'une manière générale par un clavier à quelques touches, et avantageusement, incluera un dispositif d'affichage permettant de visualiser la bonne exécution des ordres donnés ou les défauts pouvant affecter l'un des émetteurs.

Sur la figure 1, un émetteur 3 est relié à plusieurs récepteurs 41, 42....4n (n étant égal au plus à 8).

Les récepteurs sont chacun connectés à un étage de sortie 6 et, éventuellement, à un ou plusieurs capteurs 7. Sur la sortie , seront acheminées les informations nécessaires à la mise en fonctionnement de l'appareil commandé par le récepteur. Le ou les capteurs 7 sont des capteurs informant le circuit récepteur, soit d'un incident de fonctionnement, soit de la valeur d'un nombre déterminé de paramètres. Par exemple, dans le cas de stores, le capteur peut consister en une ou plusieurs cellules solaires captant l'ensoleillement en un endroit donné, le store étant programmé pour se lever ou s'abaisser en fonction de l'ensoleillement.

Un capteur 7 peut également être un capteur thermique, indiquant une surchauffe d'un organe déterminé, ce qui conduit à l'arrêt du fonctionnement de cet organe.

La figure 2 est un schéma plus détaillé du montage d'un système selon l'invention. A partir du compteur 10 de l'habitation ou de l'immeuble par exemple, on trouve en premier lieu, un filtre passe-bas 11. Ce filtre a pour objet de filtrer les signaux de commande émis par l'émetteur afin de ne pas polluer le secteur par des signaux parasites.

La ligne d'alimentation 1 est connectée derrière le filtre 11. L'interface 2 de chacun des émetteurs et récepteurs est constitué par un filtre passe-haut et par un filtre accordé. Le filtre passe-haut élimine le courant d'alimentation à la fréquence de 50 Hertz ou, dans certains pays de 60 Hertz. Le filtre accordé ne sélectionne que la fréquence porteuse qui, comme indiqué précédemment, est avantageusement fixée à 122,5 Khz. Le boîtier émetteur 3 envoie sur la ligne des instructions comme indiqué précédemment, c'est-à-dire par série de cinq mots binaires, sur une porteuse modulée en fréquence par la présence des bits. La longueur de la série est très grande par rapport aux informations utiles qui sont effectivement transmises, et qui ne nécessitent théoriquement, que 2 à 3 bits. Toutefois, cette longueur est principalement justifiée par la nécessité de transparence absolue aux bruits.

En fait, comme celà sera décrit ultérieurement, chacun des boîtiers, qu'il soit émetteur ou récepteur, est en fait un émetteur-récepteur, puisque les boîtiers 4 doivent pouvoir trafiquer avec le boîtier émetteur 3 pour lui communiquer des informations.

Comme représenté sur la figure 2, le boîtier 41 commande un moteur 12, par l'intermédiaire d'un étage de sortie en puissance tel qu'un relais 13 commandé par la sortie 6 du contrôleur 41. Dans l'exemple représenté, le boîtier 42 commande, de la même manière, par un relais 13, l'allumage d'une lampe ou d'une source lumineuse 14. Le boîtier récepteur 43 commande, pour sa part, un second moteur 15, toujours par l'intermédiaire d'un relais 13. Bien entendu, l'alimentation de tout appareil électrique peut être commandée par un récepteur 4.

La figure 3 est un schéma montrant d'une part la constitution d'un boîtier émetteur 3, d'un boîtier récepteur 4, ainsi que le branchement de ces boîtiers sur la ligne d'alimentation 1. Le couplage avec la ligne 1 est réalisé au moyen de transformateurs 21, dans les circuits desquels sont inclus des condensateurs (non référencés), et un pont de diodes. Le signal est prélevé sur la ligne et filtré, le pont de diodes assurant l'alimentation en continu des composants du circuit. Le microcircuit 22 est alimenté sous 18 volts, et le microcontrôleur 23 est alimenté sous 5 volts. Les types d'alimentation utilisés sont tout-à-fait classiques. Il aurait bien entendu été possible d'alimenter ces composants par des piles ou des accumulateurs rechargeables. En fait, le problème de l'alimentation du microcircuit et du microcontrôleur est indépendant de la transmission des données proprement dites. Le microcontrôleur 23 est, par exemple, un microcontrôleur du type 8748 produit par la société américaine INTEL. Il s'agit d'un microcontrôleur 40 broches à 8 bits, à 2048 octets de RAM, avec 3 ports entrée-sortie, une entrée d'interruption, et une horloge. Bien entendu, tout autre microcontrôleur de ce type peut être employé. Dans le cas de l'étage émetteur, le signal Rx est acheminé sur la ligne 37, entre la broche 12 du microcircuit et la broche P26 du microcontrôleur. Le signal Tx est acheminé sur la ligne 38, entre la borne P27 du microcontrôleur 23 et la broche 17 du microcircuit 22, alors que le signal Sel Rx/Tx est acheminé sur la ligne 36 entre la broche P26 du microcontrôleur et la broche 5 du microcircuit.

Du côté récepteur, les sorties à commander sont connectées aux bornes P17 et P16, alors que sur l'émetteur, les sorties sont commandées sur les bornes P20 à P22. Le code boîtier pourra être formé, dans le cas du récepteur ou de l'émetteur, sur les bornes DB0 à DB6.

Les cartes "émetteur" et "récepteur" sont pratiquement identiques, et seuls les programmes d'application vont varier en fonction de la spécialisation de chaque carte.

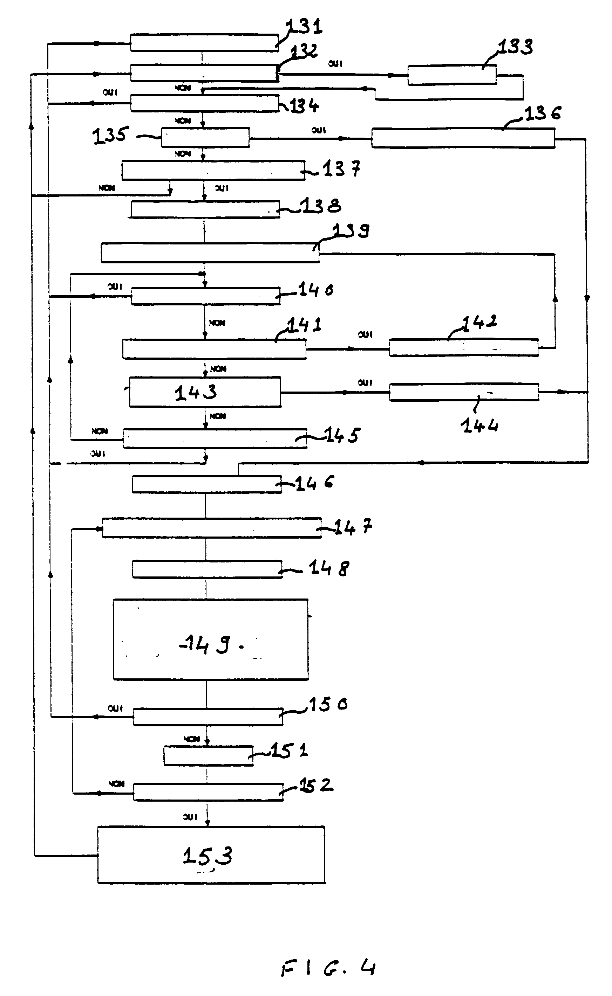

La figure 4 représente l'organigramme du microcontrôleur de l'émetteur 23. Tous les circuits récepteurs reçoivent un code, et seul le récepteur dont le code correspond au code émis revoie le signal vers l'émetteur.

Il est réalisée une synchronisation dans le déroulement des programmes de la télécommande et des récepteurs, de telle manière que lorsque l'émetteur émet une donnée, il faut que le récepteur soit en position de réception, d'où la nécessité de prévoir un nombre assez important de temporisations, qui doivent être précises quant à leur durée.

Les temporisations ont été calculées pour une valeur très précise de fréquence du quartz du microcontrôleur, laquelle a été fixée à 4 Mhertz.

En effet, la transmission série des 40 bits s'effectue, pour les 16 premiers bits, à la cadence de 1 bit par 1,08 millisecondes. Les conditions d'accrochage de la PLL ont imposé la vitesse de transmission des échanges.

Aussi, selon une autre caractéristique de l'invention, les deux séries de bits (la première de 16 et la deuxième de 24), sont transmises à des vitesses différentes, les 24 derniers bits ayant une durée supérieure aux 16 premiers et, par exemple, la durée d'un bit sera de 2,16 millisecondes.

Ainsi, l'émission des 40 bits exige un temps approximatif de 70 millisecondes.

Comme représenté sur la figure 4, la première étape du programme émetteur ou de télécommande consiste en une initialisation générale 131.

Le système interroge en 132, la temporisation d'allumage des diodes LED et, en 133, éteint éventuellement les diodes. Il scrute en 134 la touche d'arrêt d'urgence, et en 135, la touche STOP. Si celles-ci sont actives, il renvoie le programme en 31. Dans le cas contraire, il scrute en 137 les touches individuelles ou de groupe. Si aucune touche n'est appuyée, il y a retour en 131. Dans le cas contraire, il compose en 138 le début de message et en 139, arme le délai d'attente de la touche suivante. L'état de la touche STOP est scruté en 140 et en 141, une distinction est faite entre les touches individuelles et les touches de groupe. Si il s'agit de l'un de ces types de touches, le message est complété en 142 et réinjecté dans l'étage 139. Si tel n'est pas le cas, les touches de montée ou descente, et STOP, sont scrutées en 143. Le message est complété en 144 et appliqué sur l'étage 146 relatif au premier store ou autre organe. Si la touche montée, descente ou STOP n'est pas impliquée, le programme passe en 145 et est informé de l'épuisement ou non de la touche suivante.

Dans ce cas, il retourne à l'étage 140. Lorsqu'en 146, le temps accordé pour le premier store est épuisé, le message est émis en 147 et l'ordre est attendu en 148. Le programme émet alors un diagnostic en 149 après trois tentatives infructueuses. Il émet dans ce cas un ordre d'annulation ou de confirmation du message et allume une diode rouge ou verte (39 ou 40, Figure 3).

Il scrute en 150 la touche d'arrêt d'urgence et si celle-ci est inactive, envoie un ordre au store suivant. Il constate dans l'étage 152 si le nombre de stores concerné par le message est épuisé ou non, et si la réponse est affirmative, allume une diode et arme la temporisation de cette diode et retourne à l'étage 132.

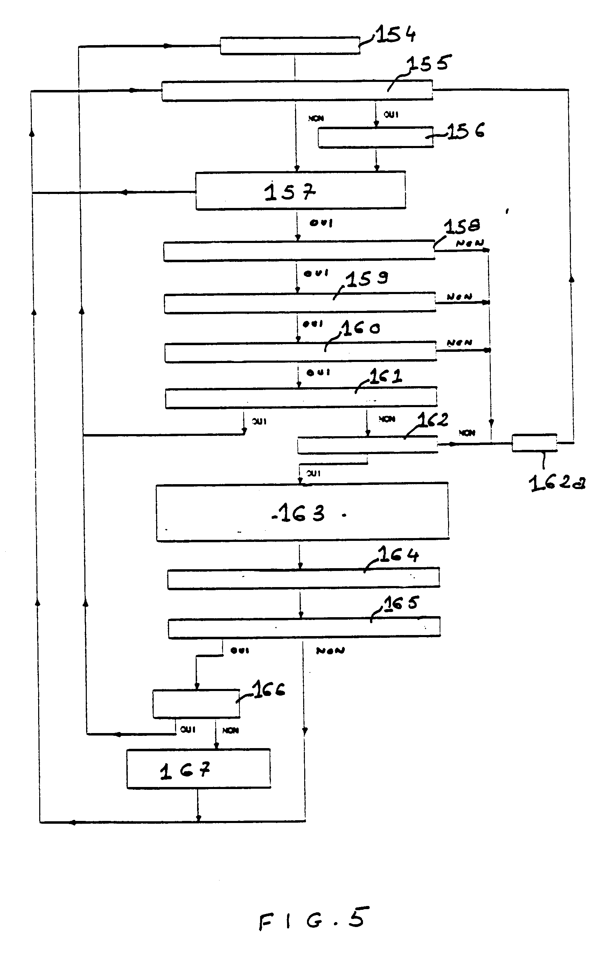

La figure 5 représente l'organigramme du microcontrôleur du récepteur.

L'organigramme d'un récepteur 4 représenté sur la figure 5 commence par une initialisation générale en 154 et scrute l'état du relais en 155. Si le délai de maintien est épuisé, le relais est mis au repos en 156. Dans le cas contraire, le front montant sur la ligne pendant un intervalle de temps est détecté en 157.

En cas d'échec, le programme revient à l'étage 155. En cas de succès, le programme se met en 158 en attente d'un message cohérent sur la ligne. En cas de réception d'un tel message, il y a identification de la famille en 155. Si cette identification correspond à celle du récepteur, il y a vérification en 160 du signal reçu et calcul. En cas d'échec des opérations effectuées dans les étages 158 à 160, le signal est ramené sur l'étage 155 à travers un étage de temporisation 162a. En 161, est vérifié si le signal reçu est le code d'arrêt d'urgence. Si oui, le programme retourne à l'initialisation générale. En 162, est comparé le code reçu et le code de l'organe ou store. Si la comparaison est négative, le programme retourne, à travers 162a, à l'étage 155. Si le code reçu et le code de l'appareil sont identiques, le message echo est préparé en 163 avec positionnement de l'indication d'origine du message et introduction de certains paramètres propres au récepteur 4, provenant par exemple de capteurs. En 164, le message echo est transmis au récepteur et le diagnostic de l'émetteur 3 est reçu en 165. Si il y a annulation, le programme retourne à l'initialisation générale 154.

Dans le cas contraire, la présence d'un ordre STOP est contrôlée en 166. Si il n'y a pas d'ordre STOP, le relais est armé en 167 et la commande est exécutée.

Le présent système est prémuni des microcoupures du secteur, grâce à son circuit d'alimentation. De plus, dans le cas de mauvais fonctionnement du microcontrôleur, un circuit de "chien de garde" a été mis en place afin de réinitialiser le dispositif.

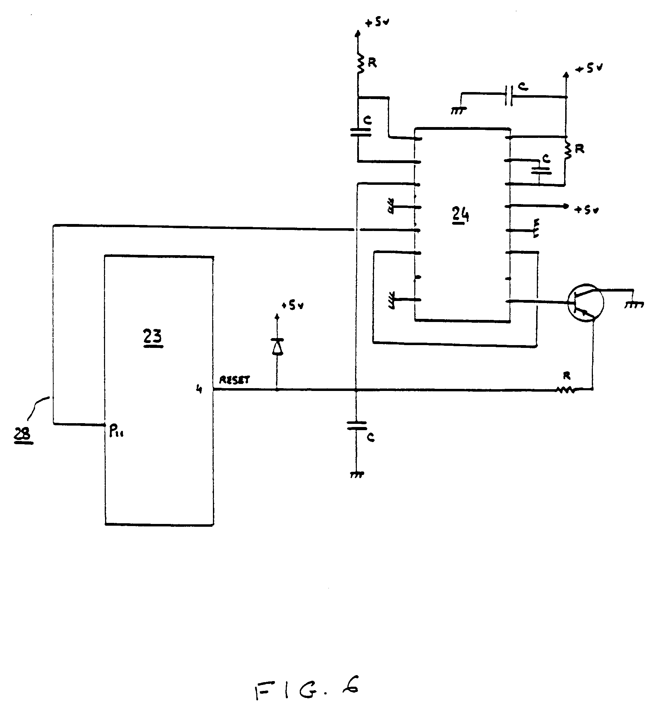

Du point de vue matériel, il est réalisé comme schématisé sur la figure 6. La sortie du circuit 24 agit directement sur la broche RESET du microcontrôleur.

Le chien de garde assure, à intervalles réguliers, le bon fonctionnement du microcontrôleur et provoque, le cas échéant, une remise à zéro du dispositif. Une telle sécurité peut également être assurée par voie logicielle : on effectue un auto-contrôle temporel du programme, notamment en cas d'allongement anormal de la durée d'exécution du programme. La méthode consiste en une surveillance permanente du respect de la chronologie des segments du programme. Lors d'un déroulement correct du programme, le prochain segment à exécuter est connu, et son code est mémorisé dans une case mémoire convenue. Dans le cas du déroulement du segment suivant, le code précédent est mémorisé et comparé à celui du segment à traiter. Une différence des codes indique un mauvais déroulement du programme, ce qui a pour effet de remettre le système à zéro. Lorsque les codes coincident, le traitement du programme peut se poursuivre et le code du segment suivant est mémorisé.

## Revendications

1. Système domotique de transmission de signaux de commande sur une ligne de distribution d'énergie électrique, à l'intérieur d'un immeuble, comprenant au moins un émetteur (3) et au moins un récepteur (4), l'émetteur (3) et le récepteur (4) étant couplés au réseau de distribution, l'émetteur (3) générant une porteuse haute fréquence modulée par les informations, le récepteur (4) étant muni de moyens aptes à démoduler la porteuse haute fréquence, les informations étant transmises sous forme binaire en série, l'émetteur (3) incluant un microcontrôleur, caractérisé en ce que chacun des ensembles émetteur (3) et récepteur (4) inclût un microcircuit (22) et un microcontrôleur (23) structurellement identiques, mais chargés avec des programmes spécialisés, pour utiliser le reseau de distribution comme un bus bidirectionnel sur lequel le système réalise un dialogue entre l'émetteur(3) et le ou les récepteurs (4) ( sécurité de dialogue, redondance, question, réponse, validation et retour d'informations) permettant le contrôle par l'émetteur (3) de l'ordre recu par un ou des récepteurs et de l'état du ou des récepteurs(4).

2. Système selon la revendication 1, caractérisé en ce que le signal émis par l'émetteur (3) et reçu par le récepteur (4) est un signal de mots binaires émis en série, le premier mot constituant le signal de réveil qui permet d'activer une boucle PLL à verrouillage de phase, le mot suivant constituant le mot de passe, le suivant réalisant un filtrage numérique permettant une identification d'un ensemble télécommande/boîtiers de réception, le mot suivant constituant le numéro (ou adresse) de l'appareil à commander, ainsi que divers bits d'état, et le dernier mot contenant les informations de commande et la vérification de la transmission.

3. Système selon l'une des revendications 1 ou 2, caractérisé en ce que la fréquence de la porteuse est comprise entre 120 et 125 KHertz.

4. Système selon l'une quelconque des revendications précédentes, caractérisé en ce qu'il est codé suivant la configuration de l'installation, chaque récepteur (4) possédant son propre code et assurant ainsi un filtrage numérique des informations.

5. Système selon l'une quelconque des revendications précédentes, caractérisé en ce qu'il inclût une protection du point de vue logiciel et matériel afin de le réinitialiser en cas de microcoupures ou de perturbations dans le fonctionnement du microcontrôleur.

6. Dispositif de commande d'un ensemble de stores faisant appel à un système selon l'une quelconque des revendications précédentes, caractérisé en ce que les stores peuvent être commandés individuellement ou en groupe, en montée, en descente, arrêt intermédiaire ou arrêt d'urgence, l'arrêt intermédiaire permettant un alignement des stores commandés et pouvant s'adresser à un ou plusieurs stores en particulier dans une commande groupée, l'arrêt d'urgence concernant l'ensemble de tous les récepteurs d'un même groupe et ayant un effet immédiat.

## Claims

1. Domotic system for transmitting control signals along an electricity distribution line within a building and including at least one trasmitter (3) and at least one receiver (4), the transmitter (3) and the receiver (4) being coupled to the distribution network, the transmitter (3) generating a high frequency carrier wave modulated by data, the receiver (4) being equipped with suitable means for demodulating the high frequency carrier wave, the data being transmitted as in-series binary signals, the transmitter (3) including a micro-controller,
characterized in that each of the transmitter (3) and receiver (4) assemblies include a micro-circuit (22) and a micro-controller (23) which are structurally identical but loaded with specialized programmes for using the distribution network as a bi-directional bus on which the system dialogues between the transmitter (3) and the receiver(s) (4) (dialogue security, redundancy, interrogation, response, validation and data return) thereby allowing the transmitter (3) to control the order received by a receiver(s) and the status thereof.

2. System as per claim 1 characterized in that the signal issued by the transmitter (3) and received by the receiver (4) is a signal in channel words transmitted in series; the first word comprising the activation signal which activates a phase locked loop, the following word comprising the password, the following executing numerical filtering for identification of a reception telecontrol/box assembly, the following word comprising the number (or address) of the item to be controlled, together with the various status bits, and the last word containing the control and confirmation of transmission data.

3. System as per claim 1 and 2 characterized in that the frequency of the carrier wave is between 120 and 125 KHz.

4. System as per any one of the aforesaid claims characterized in that it is coded as per the configuration of the installation, each receiver (4) having its own code and thereby ensuring numerical filtering of the data.

5. System as per any one of the aforesaid claims characterized in that it includes protection of the software and hardware in order to be reinitialized in case of micro-breaks or disturbances in the micro-controller operation.

6. Control device for an assembly of blinds which makes use of a system as per any one of the aforesaid claims characterized in that the blinds can be controlled individually or in groups and raised or lowered, stopped in a mid-position or emergency stopped, the mid-position stoppage allowing the controlled blinds to be aligned, capable of being addressed to one or several blinds in particular by a grouped order, the emergency stop concerning all the receivers of a same group and having an immediate effect.

## Patentansprüche

1. Domotik-System zur Übertragung von Steuersignalen über die Stromverteilerleitung im Innern eines Gebäudes, bestehend aus mindestens einem Sender (3) und mindestens einem Empfänger (4), wobei Sender (3) und Empfänger (4) an das Verteilernetz gekoppelt sind, der Sender (3) geeignet ist, eine durch die Informationen modulierte Hochfrequenz-Trägerwelle zu erzeugen und der Empfänger (4), diese Hochfrequenz-Trägerwelle zu demodulieren, und die mittels eines in den Sender (3) integrierten Mikrokontrollers erzeugten Informationen in serieller binärer Form übermittelt werden,
dadurch gekennzeichnet, daß jede der aus Sender (3) und Empfänger (4) bestehenden Einheiten eine Mikroschaltung (22) und einen Mikrokontroller (23) enthält, die beide strukturmäßig identisch, jedoch mit speziellen Programmen geladen sind, um das Verteilernetz wie einen zweiseitig gerichteten Bus zu benutzen, auf dem das System einen Dialog zwischen dem Sender (3) und dem/den Empfänger(n) (4) ausführt (Dialogsicherheit, Redundanz, Frage, Antwort, Validierung und Informationsrückmeldung) und damit die Kontrolle durch den Sender (3) des von einem oder mehreren Empfängern (4) empfangenen Befehls und des Zustandes der besagten Empfänger ermöglicht.

2. System nach Anspruch 1, dadurch gekennzeichnet, daß das von dem Sender (3) abgegebene und von dem Empfänger (4) empfangene Signal ein seriell gesendetes Signal von Binärworten ist, wobei das erste Wort das Beginnzeichen bildet, welches die Aktivierung einer PLL-Schleife mit Phasenverriegelung ermöglicht, das folgende Wort das Kennwort bildet, das nächste eine numerische Filtrierung bewirkt welche eine Identifizierung einer Einheit Fernbedienung/Empfangsgerät ermöglicht, das folgende Wort die Nummer (bzw. Adresse) des zu steuernden Gerätes sowie verschiedene Statusbits darstellt und das letzte Wort die Steuerinformationen und die Prüfung der Übermittlung enthält.

3. System nach Anspruch 1 oder 2, dadurch gekennzeichnet, daß die Trägerfrequenz zwischen 120 und 125 kHz liegt.

4. System nach irgendeinem der vorhergehenden Ansprüche, dadurch gekennzeichnet, daß dieses entsprechend der Konfiguration der Installation kodiert ist, wobei jeder Empfänger (4) seinen eigenen Kode besitzt und somit ein numerisches Filtrieren der Informationen gewährleistet.

5. System nach irgendeinem der vorhergehenden Ansprüche, dadurch gekennzeichnet, daß es eine Schutzfunktion hinsichtlich Software und Hardware beinhaltet, um im Fall von kurzzeitigen Stromausfällen oder Funktionsstörungen des Mikrokontrollers eine Neuinitialisierung des Systems durchzuführen.

6. Steuervorrichtung für eine Markisenanordnung in Verbindung mit einem System nach irgendeinem der vorhergehenden Ansprüche, dadurch gekennzeichnet, daß die Markisen einzeln oder gruppenweise in Aufrollen, Abrollen, Zwischenstopp, Notausschaltung gesteuert werden können, wobei der Zwischenstopp die Angleichung der angetriebenen Markisen ermöglicht und eine oder mehrere Markisen, insbesondere in einem Gruppenantrieb ansteuerbar sind, die Notausschaltung die Gesamtheit aller Empfänger einer selben Gruppe betrifft und eine sofortige Wirkung hat.
